# EUROPEAN PATENT SPECIFICATION

(11) **EP 0 431 307 B1**
(45) Date of publication and mention of the grant of the patent: **09.02.1994**
(21) Application number: 90120734.0
(22) Date of filing: 29.10.1990
(51) Int. Cl.: F16C 1/22

(54) **Adjustable cable sheath terminal**
Einstellbares Kabelhüllenendstück
Extrémité de gaine de câble ajustable

(30) Priority: 05.12.1989 ES 8904147
(43) Date of publication of application: 12.06.1991
(73) Proprietor: FICO-CABLES, S.A., E-08191 Rubi (ES)
(72) Inventor: Roca Cabestany, Agustin, E-08191 Rubi, Barcelona (ES)
(74) Representative: Schwabe - Sandmair - Marx

(56) References cited:
- DE-A- 4 010 741
- GB-A- 2 176 861
- US-A- 4 798 100

## Description

### Technical Field of the Invention

The present invention relates to an adjustable cable sheath terminal constituted by an essentially cylindrical hollow main body provided with mechanical means for anchorage to a fixed point, by an adjusting rod having an external screw thread and which, fixedly attached at one of the ends thereof to the sheath of the cable whose length is to be adjusted, may slide over a sufficient distance inside said main body, and by retaining fingers which may firmly retain the said adjusting rod in the desired position. These terminals are particularly used in the automobile industry.

### Background of the invention

Cables provided with protective sheaths or with sheaths adapted to any other function or purpose, are widely used in all kinds of mechanical applications where the transmission of forces or of movements between the source and the receiver must be carried out with non rigid linkings. Exemplary of the application of such cables are, among others, the control cables used in the automobile industry which, among other functions, connect the clutch pedal to the corresponding mechanism, interconnections of the brake system, as link between the gear change lever and the gear box, the link between the bonnet opening control, normally the engine bonnet and the latter, and the link between the speedometer on the vehicle dashboard and the gear box.

A crucial factor for the perfect operation of the force transmission device using the cable in the above-mentioned examples is the need to have the appropriate length of cable in each particular case. In view of the peculiar features of the installation of control cables in motor vehicles and the features corresponding to each type of cable with its specific connection and sheath terminals, the aforesaid condition makes it necessary to have recourse to more or less constructionally and operatively complex devices allowing the length of the sheathed control cable to be adjusted at the appropriate points, depending on the structure of the vehicle itself or on assembly conditions.

From GB-A-2 176 861 there is known an adjustable cable sheath terminal constituted by an essentially cylindrical hollow main body provided with mechanical means for anchorage to a fixed point, by an adjusting rod having an external screw thread and which, fixedly attached at one of the ends thereof to the sheath of the cable whose length is to be adjusted, may slide over a sufficient distance inside said main body and by retaining fingers which may firmly retain the said adjusting rod in the desired position.

As an example of the above mentioned devices there may be cited the device of ES-A-8803905, "Control cable tension selfadjusting device", and that of ES-A-8901238, "Adjustable connecting device". In the former ES-A-8903905, the sheathed cable length is adjusted automatically by a spring which, initially compressed, is released when the device is used; and in the latter, ES-A-8901238, the ajdustment of the sheathed control cable length is effected manually without using springs.

In both cases, i.e. in ES-A-8803905 and ES-A-8901238, both the large number of component parts of the devices and their respective structurs and designs have the drawback of a high production cost and limited operative flexibility which limit their possibilities of use.

### Summary of the Invention

To provide a new solution to the problems raised by the adjustment of the length of cables having a protective sheath, an adjustable cable sheath terminal whose structure and operative design are novel is disclosed.

The adjustable cable sheath terminal of the invention is characterized in that it is further constituted by a lock nut which engages the retaining fingers, said lock nut being provided on the outer surface of the main body and being positioned to cover radial through holes formed in said main body, the lock nut being provided in the interior thereof with tightening projections for pressing against the retaining fingers, said retaining fingers being housed in said radial through holes of said main body.

The main body, which is made from materials having mechanical properties adequate for the intended purpose, is provided with a sufficient number of radial through holes preferably disposed on a single plane perpendicular to the longitudinal axis of the main body, for adjustably housing the retaining fingers which, being of the same number as the radial holes, can retain said adjusting rod attached to the cable sheath in the desired position.

The outer surface of the main body is also formed with longitudinal projections for correctly positioning the lock nut relative to the adjusting rod retaining fingers and with a sufficient number of appropriately dimensioned recesses for setting the position of the said lock nut preventing it from extemporaneously coming out of or changing its locked position.

The through hole characterizing the main body of the terminal of the invention and through which the adjusting rod attached to the cable sheath can slide over a sufficient distance, is provided with two portions of different diameters which may have a different length, on one of which the adjusting rod can snugly slide, while the other portion, which is of larger diameter, comprises projections limiting the maximum movement of the adjusting rod and preventing it from coming out of the main body.

A particularly remarkable feature of the terminal of the invention consists of the fact that the position of the adjusting rod, which is fixedly attached at one end thereof to the cable sheath inside the main body and which precisely caters for the adjustment of the length of the sheathed cable, is controlled manually or automatically by way of a spring which is incorporated inside said main body.

The larger diameter portion of the main body through hole, through which the adjusting rod attached to the cable sheath can slide, is dimensioned such that it can conveniently house a spring which, under compression automatically adjusts the sheathed cable length.

The spring is preferably disposed coaxially relative to the adjusting rod and presses at one end thereof against the flat surface defining the change of section of the main body through hole, said flat surface being perpendicular to the longitudinal axis of the through hole and, at the other end thereof, presses against the adjusting rod.

The adjusting rod, which is provided with an external screw thread extending over a sufficient distance and is fixedly attached at one end thereof to the cable sheath, is provided with a longitudinal through hole through which the portion of sheathless cable crossing through the main body may conveniently slide, the said end having a preferably annular projection which coacts with the projections formed inside the main body.

The retaining fingers for the adjusting rod are essentially parallelepipedic, two opposing surfaces thereof being slightly curved, one of which is provided with a screw thread of the same pitch as the screw thread formed on the outer surface of the adjusting rod, the retaining fingers also being provided with ejector springs, such as corresponding resilient projections which permanently urge said fingers radially outwardly, to establish the appropriate rest, i.e. released position thereof, in the radial through holes formed in the main body.

The retaining fingers of the adjusting rod are attached to a concentric open perimeter ring of resilient material, acting as ejector springs, i.e. in replacement of the said resilient extensions.

The lock nut operating on the retaining fingers of the adjusting rod is provided in the interior thereof with longitudinal tightening projections for pressing, after an appropriate rotation of the lock nut, against the said retaining fingers and overcoming the permanent action of the ejector springs, to which end the number and position thereof are the same as the number and position of the radial through holes formed in the main body in which said retaining fingers are located, there also being in the interior of said lock nut positioning projections, the number and position of which are also the same as the number and position of the recesses formed on the outer surface of the main body for setting the position of the lock nut in the locking or retaining position of the adjusting rod.

The lock nut is also provided on the outer surface thereof with a knurled portion or a number of alternating recesses of appropriate dimensions which are for facilitating the operations of setting the length of the cable provided with protective or other sheath for the operative.

For ensuring correct guiding of the cable, the end of the adjusting rod opposite to the one fixedly attached to the cable sheath is optionally provided with a tubular guide through which the sheathless portion of cable slides.

### Brief Description of the Drawings

The adjustable cable sheath terminal of the invention is illustrated in the sheets of drawings accompanying the present description. In the drawings:

Figure 1 is a cross section view of the terminal of the invention, showing the adjustment position in which the sheathed cable length is maximum.

Figure 2 is a cross section view on the line II-II of Figure 1.

Figure 3 is a cross section view of the terminal of the invention, showing an intermediate adjustment position of the sheathed cable length.

Figure 4 is a cross section view on the line IV-IV of Figure 3.

Figure 5 is a cross section view of the terminal of the invention, incorporating a spring for automatic adjustment, showing the adjustment position in which the sheathed cable length is maximum.

Figure 6 is a cross section view on the line VI-VI of Figure 5.

Figure 7 is a cross section view of the terminal of the invention, incorporating a spring for automatic adjustment, showing an intermediate adjustment position of the sheathed cable length.

Figure 8 is a cross section view on the line VIII-VIII of Figure 7.

Figure 9 is a cross section view of the terminal of the invention, incorporating a spring for automatic adjustment, showing the adjustment position in which the sheathed cable length is minimum.

### Detailed Description of the Embodiment

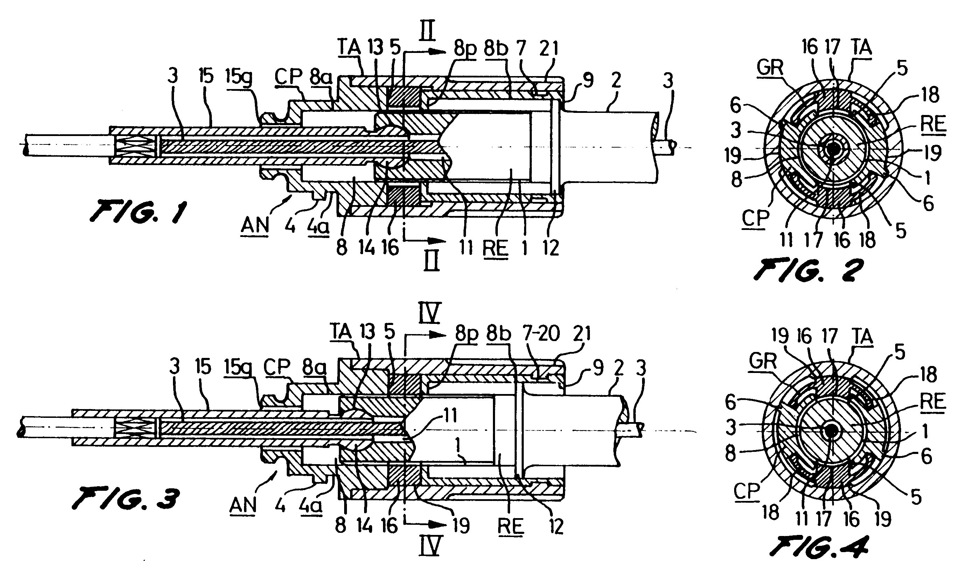

The adjustable cable sheath terminal of the invention described here as an exemplary embodiment is constituted, as shown mainly in Figures 1, 3, 5, 7 and 9 of the attached sheets of drawings, by the main generally cylindrically shaped hollow body CP provided with mechanical means AN for anchorage thereof to a fixed point, by an adjusting rod RE having an external screw thread 1 and which, fixedly attached at one end thereof to the sheath 2 of the cable 3 whose length is to be adjusted, may slide over a sufficient distance in the interior of the main body CP and by a lock nut TA which engages the retaining fingers GR which may retain the said adjusting rod RE in the desired position.

In the present embodiment the mechanical means AN are constituted by the radial projection 4 forming one end of the main body CP. The radial projection 4 defines a U-shaped housing 4a of appropriate dimensions so that, in engagement with the means disposed on the vehicle structure (which have not been shown in the attached sheets of drawings) forming the fixed point, the terminal of the invention may be fixedly attached to the said fixed point, preventing any change of position relative to the intended operating position.

The main body CP is provided with two radial through holes 5 disposed, as shown in all the Figures of the attached sheets of drawings, on a single plane perpendicular to the longitudinal axis of the terminal of the invention. The radial through holes 5 are dimensioned so as to be able snugly to house corresponding retaining fingers GR, whose purpose is to retain and fix the adjusting rod in the desired position, preventing extemporaneous release, as shown in detail in Figures 2, 4, 6 and 8.

Figures 2, 4, 6 and 8 show how the outer surface of the main body CP is provided with the two longitudinal projections 6 the purpose of which is to position the lock nut TA correctly relative to the retaining fingers GR while the cable 3 length is being adjusted relative to the sheath 2.

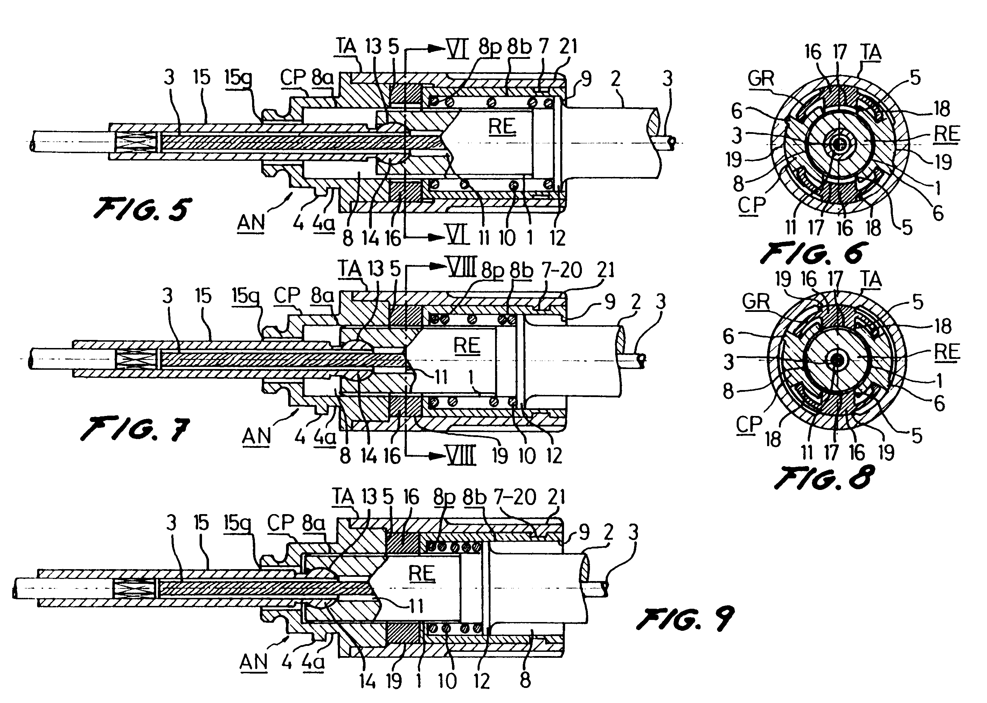

The main body CP is also provided with the two recesses 7, shown in Figures 1, 3, 5, 7 and 9 which, suitably dimensioned, have the mission of fixing said lock nut TA in the tightened or retained position of the adjusting rod RE, shown in Figures 3, 7 and 9, thereby preventing the terminal of the invention from coming out of or changing its position, owing to the operative conditions to which it is subjected when the vehicle is running.

The main body CP is provided with the through hole 8 through which the adjusting rod RE attached to the sheath 2 of the cable 3 may slide over a sufficient distance. The through hole 8 has a first portion 8a in which the adjusting rod RE may snugly slide, while the remaining portion 8b, which is of larger diameter, contains a projection 9, the purpose of which is to limit the maximum movement of the adjusting rod RE, thereby preventing it from coming out of the main body CP, as shown in detail in Figures 1 and 5.

The position of the adjusting rod RE, which is attached to the sheath 2 of the cable 3, in the interior of the main body CP, and which provides for the adjustment of the sheathed cable 2-3, may be manually controlled as shown in Figures 1 and 3, or automatically by the action of a spring 10 housed in the main body CP, as shown in Figures 5, 7 and 9.

The larger diameter portion 8b of the through hole 8 of the main body CP may be dimensioned in such a way as to be able to house the spring 10 which, under compression, expands and automatically adjusts the length of the cable 3 provided with the sheath 2.

The spring 10 is preferably coaxially disposed relative to the adjusting rod RE and presses, at one end thereof, against the flat surface 8p defining the change of section of the through hole 8. As shown in Figures 1, 3, 5, 7 and 9, the flat surface 8p is perpendicular to the longitudinal axis of the through hole 8. At the other end thereof the spring 10 presses against the adjusting rod RE.

The adjusting rod RE is provided with a longitudinal through hole 11 through which the cable 3 may suitably slide, as shown in all the Figures of the attached sheets of drawings. The end of the adjusting rod RE fixedly attached to the sheath 2 of the cable 3 is formed by the preferably annular rim 12 which coacts with the lip 9 disposed on the larger diameter section 8b of the through hole 8 of the main body CP.

In this embodiment, with a view to guiding the cable 3 correctly in the longitudinal movements thereof, the end of the adjusting rod RE opposite to the end attached to the sheath 2 of the cable 3 is provided with a seat 13 acting as housing and retaining means for the end 14 of the tubular guide 15, as shown in detail in Figures 1, 3, 5, 7 and 9 of the attached sheets of drawings. The said cable 3 may slide suitably therethrough. The tubular guide 15 is, in turn, suitably guided by the through hole 15g through which it may slide snugly.

The retaining fingers GR retaining the the adjusting rod RE in the desired position are each formed by an essentially parallelepipedic body 16, two opposite surfaces of which are slightly curved. One of said surfaces is provided with a screw thread 17 of the same pitch as the external screw thread 1 of the adjusting rod RE. The retaining fingers GR are also provided with ejector springs which in the present embodiment are formed by corresponding resilient extensions 18 permanently urging said fingers radially outwardly, so as to cater for the appropriate rest, i.e. released position thereof, in the radial through openings 5 formed in the main body CP. Figures 2, 4, 6 and 8 of the attached sheets of drawings show the retaining fingers GR of this embodiment in detail in section.

The number of retaining fingers GR may obviously be different from the number contemplated in this embodiment, depending on the needs raised in each particular application.

Instead of the resilient extensions 18, the retaining fingers GR may be attached to a concentric ring of resilient material and having an open perimeter, acting as ejector springs.

The lock nut TA operating on the retaining fingers GR is provided in the interior thereof with two longitudinal tightening projections 19 for pressing, after an appropriate rotation of the lock nut TA, against the said retaining fingers GR overcoming the permanent action of the ejector springs which, in this embodiment, are formed by the resilient extensions, to which end the number and position thereof are the same as the number and position of the radial through holes 5 formed in the main body CP in which said retaining fingers GR are housed. The interior of said lock nut TA is also provided with the two positioning projections 20, the number and position of which are also the same as the number and position of the recesses 7 of the main body CP and with which they coact as shown in detail in Figures 3, 7 and 9 of the attached sheets of drawings.

The lock nut TA of this embodiment, as shown in Figures 1, 3, 5, 7and 9, is also provided with a number of alternating longitudinal recesses 21 suitably dimensioned to facilitate the operations for adjusting the length of the cable 3 provided with the sheath 2 for the operator. To this end, the series of longitudinal recesses 21 may be replaced by a knurling or even by appropriately dimensioned projections distributed over the surface of the lock nut TA.

Figures 1 and 3 show the terminal of the invention in which the length of the cable 3 provided with the sheath 2 is adjusted manually. In Figure 1, the position of the lock nut TA, shown in Figure 2 allows the adjusting rod RE to slide inside the main body CP to the extent required for adjusting the length of the sheathed cable 2-3. Figure 3 shows how, once the appropriate length of the of the sheathed cable 2-3 has been determined by the corresponding sliding of the adjusting rod RE, the position of the lock nut TA, shown in Figure 4 and attained by rotation thereof, causes the screw thread of the retaining fingers GR and the external screw thread 1 of the adjusting rod RE to be firmly locked together, so that the longitudinal sliding of said adjusting rod RE is prevented. Figure 3 shows how the the recesses 7 and the projections 20, disposed on the main body CP and the lock nut TA respectively, become mutually engaged to prevent the lock nut TA from extemporaneously coming out of or changing the locking position described.

Figures 5, 7 and 9 show the terminal of the invention in which the length of the sheathed cable 2-3 is adjusted automatically by the action of the spring 10 housed inside the main body CP. Figure 9 shows the state in which the terminal of the invention is supplied for use. Under these conditions of supply, the spring 10 is compressed owing to the position occupied by the adjusting rod RE and the length of the sheathed cable 2-3 is at its shortest. The position of the adjusting rod RE is firmly fixed, since the screw threads 1 and 17 on the adjusting rod RE and the retaining fingers GR, respectively, are locked together by the action of the longitudinal tightening projections 19 formed on the inside of the lock nut TA since the latter is in the position shown in Figure 9. In this position of the lock nut TA, the recesses 7 and projections 20, disposed on the main body CP and on the lock nut TA, respectively, are in mutual engagement and prevent the said lock nut TA from coming out of or changing the locking position described.

Once the terminal of the invention has been firmly attached to a fixed point by way of the mechanical means AN formed on the main body CP and the ends of the cable 3 and sheath 2 are appropiately attached, rotation of the lock nut TA causes release of the adjusting rod RE which is urged by the spring 10 to slide longitudinally to the point in which the length of the sheathed cable 2-3 is appropriate for the particular application. Once the length of the sheathed cable 2-3 has been set automatically, the position of the adjusting rod RE is firmly fixed by a further rotation of the lock nut TA which causes the longitudinal tightening projections 19 thereof to engage the retaining fingers GR, whereby the screw threads 1 and 17 of the adjusting rod RE and the retaining fingers GR, respectively, will be locked together, thereby preventing the position of the adjusting rod RE and, consequently, the adjusted length of the sheathed cable 2-3 from varying. The mutual engagement of the recesses 7 and the projections 20, disposed on the main body CP and on the lock nut TA, in turn prevents the lock nut TA from coming out of or changing the locked position described.

Figure 5 shows the position occupied by the adjusting rod RE urged by the spring 10 when the latter is released and in which the length of the sheathed cable 2-3 is at its longest. Fixation in this position is carried out as described above.

The embodiment described is obviously not limitative of the application of the terminal of the invention to control devices and it may be modified in any way not affecting the essential structure thereof which is necessary to adapt it to the needs of each particular application.

## Claims

1. An adjustable cable sheath terminal constituted by an essentially cylindrical hollow main body (CP) provided with mechanical means (AN) for anchorage to a fixed point; by an adjusting rod (RE) having an external screw thread (1) and which, fixedly attached at one of the ends thereof to the sheath (2) of the cable (3) whose length is to be adjusted may slide over a sufficient distance inside said main body (CP); and by retaining fingers (GR) which may firmly retain the said adjusting rod (RE) in the desired position, **characterized** in that
it is further constituted by a lock nut (TA) which engages the retaining fingers (GR),
said lock nut (TA) being provided on the outer surface of the main body (CP) and being positioned to cover radial through holes (5) formed in said main body (CP), the lock nut (TA) being provided in the interior thereof with tightening projections (19) for pressing against the retaining fingers (GR),
said retaining fingers (GR) being housed in said radial through holes (5) of said main body (CP).

2. The adjustable cable sheath terminal of claim 1, **characterized** in that said radial through holes (5) are disposed on a single plane perpendicular to the longitudinal axis of the main body (CP), for adjustably housing the retaining fingers (GR) which are of the same number as the radial holes.

3. The adjustable cable sheath terminal according to one of the claims 1 or 2, **characterized** in that the outer surface of the main body (CP) is formed with longitudinal projections (6) for correctly positioning the lock nut (TA) relative to the adjusting rod (RE) and said retaining fingers (GR) and with a sufficient number of appropriately dimensioned recesses (7) for setting the position of the said lock nut (TA) preventing it from extemporaneously coming out of or changing its locked position.

4. The adjustable cable sheath terminal according to one of the claims 1 to 3, **characterized** in that the through hole (8) of the main body (CP) through which the adjusting rod (RE) attached to the sheath (2) of the cable (3) can slide over a sufficient distance, is provided with two portions (8a, 8b) of different diameters which may have a different length, on one of which (8a) the adjusting rod (RE) can snugly slide, while the other portion (8b), which is of larger diameter, comprises lips (9) limiting the maximum movement of the adjusting rod (RE) and preventing it from coming out of the main body (CP).

5. The adjustable cable sheath terminal according to one of the claims 1 to 4, **characterized** in that the position of the adjusting rod (RE), which is fixedly attached at one end thereof to the sheath (2) of the cable (3) inside the main body (CP) and which precisely caters for the adjustment of the length of the sheathed cable (2, 3), is controlled manually or automatically by way of a spring (10) which is incorporated inside said main body (CP).

6. The adjustable cable sheath terminal according to one of the claims 1 to 5, **characterized** in that the larger diameter portion (8b) of the main body (CP) through hole (8), through which the adjusting rod (RE) attached to the sheath (2) of the cable (3) can slide, is dimensioned such that it can conveniently house a spring (10) which, under compression, automatically adjusts the sheathed cable (2, 3) length.

7. The adjustable cable sheath terminal according to claim 6, **characterized** in that the spring (10) is preferably disposed coaxially relative to the adjusting rod (RE) and presses at one end thereof against the flat surface (8p) defining the change of section (8a, 8b) of the main body (CP) through hole (8), said flat surface (8p) being perpendicular to the longitudinal axis of the through hole (8) and, at the other end thereof, presses against the adjusting rod (RE).

8. The adjustable cable sheath terminal according to one of the claims 1 to 7, **characterized** in that the adjusting rod (RE), which is provided with an external screw thread (1) extending over a sufficient distance and is fixedly attached at one end thereof to the sheath (2) of the cable (3), is provided with a longitudinal through hole (11) through which the portion of sheathless cable (3) crossing through the main body (CP) may conveniently slide, the said end having a preferably annular projection (12) which coacts with the lips (9) formed inside the main body (CP).

9. The adjustable cable sheath terminal according to claim 1, **characterized** in that the retaining fingers (GR) for the adjusting rod (RE) are essentially parallelepipedic, two opposing surfaces thereof being slightly curved, one of which is provided with a screw thread (17) of the same pitch as the screw thread (1) formed on the outer surface of the adjusting rod (RE), the retaining fingers (GR) also being provided with ejector springs, such as corresponding resilient projections (18) which permanently urge said fingers (GR) radially outwardly, to establish the appropriate rest, i.e. released position thereof, in the radial through holes (5) formed in the main body (CP).

10. The adjustable cable sheath terminal of claim 1 or 9, **characterized** in that the retaining fingers (GR) are attached to a concentric open perimeter ring of resilient material, acting as ejector springs in replacement of the said resilient extensions (18).

11. The adjustable cable sheath terminal according to one of the claims 1 to 10, **characterized** in that the longitudinal tightening projections (19) of the lock nut (TA) are provided for pressing, after an appropriate rotation of the lock nut (TA), against the said retaining fingers (GR) and overcoming the permanent action of the ejector springs, to which end the number and position thereof are the same as the number and position of the radial through holes (5) formed in the main body (CP) in which said retaining fingers (GR) are located, there also being in the interior of said lock nut positioning projections (20), the number and position of which are also the same as the number and position of the recesses (7) formed on the outer surface of the main body (CP) for setting the position of the lock nut (TA) in the locking or retaining position of the adjusting rod (RE).

12. The adjustable cable sheath terminal according to one of the claims 1 to 11, **characterized** in that the lock nut (TA) is provided on the outer surface thereof with a knurled portion or a number of alternating recesses (21) of appropriate dimensions which are for facilitating the operations of setting the length of the sheathed cable (2, 3) for the operative.

13. The adjustable cable sheath terminal according to one of the claims 1 to 12, **characterized** in that the end of the adjusting rod (RE) opposite to the one fixedly attached to the sheath (2) of the cable (3) is optionally provided with a tubular guide (15) through which the sheathless portion of cable (3) slides.

## Patentansprüche

1. Einstellbares Kabelhüllenendstück, das gebildet ist durch einen im wesentlichen hohlen Hauptkörper (CP), der mit einer mechanischen Einrichtung (AN) zur Verankerung an einem festgelegten Punkt versehen ist; durch eine Einstellstange (RE) mit einem Außengewinde (1), die, während sie mit dem einen ihrer Enden fest an der Hülle (2) des Kabels (3) angebracht ist, dessen Länge eingestellt werden soll, über einen ausreichenden Abstand innerhalb des genannten Hauptkörpers (CP) gleiten kann; und durch Haltefinger (GR), die die genannte Einstellstange (RE) in der gewünschten Lage festhalten können, dadurch **gekennzeich****net,** daß
es ferner von einer Sicherungsmutter (TA) gebildet ist, die in die Haltefinger (GR) eingreift,
wobei die genannte Sicherungsmutter (TA) an der Außenfläche des Hauptkörpers (CP) vorgesehen ist und so angeordnet ist, daß sie radiale Durchgangsbohrungen (5) abdeckt, die im genannten Hauptkörper (CP) ausgebildet sind, und die Sicherungsmutter (TA) in ihrem Inneren mit Festspann-Vorsprüngen (19) zum Andrücken gegen die Haltefinger (GR) versehen ist, und
wobei die genannten Haltefinger (GR) in den genannten radialen Durchgangsbohrungen (5) des genannten Hauptkörpers (CP) aufgenommen sind.

2. Einstellbares Kabelhüllenendstück nach Anspruch 1, dadurch **gekennzeichnet,** daß die genannten radialen Durchgangsbohrungen (5) auf einer einzigen Ebene senkrecht zur Längsachse des Hauptkörpers (CP) zur einstellbaren Aufnahme der Haltefeder (GR) angeordnet sind, die dieselbe Anzahl wie die radialen Bohrungen aufweisen.

3. Einstellbares Kabelhüllenendstück nach einem der Ansprüche 1 oder 2, dadurch **gekennzeichnet,** daß die Außenoberfläche des Hauptkörpers (CP) mit Längsvorsprüngen (6) zum korrekten Anordnen der Sicherungsmutter (TA) relativ zu der Einstellstange (RE) und den genannten Haltefingern (GR) und mit einer ausreichenden Anzahl in geeigneter Weise bemessener Aussparungen (7) ausgebildet ist, um die Lage der genannten Sicherungsmutter (TA) festzustellen, um sie daran zu hindern, zur Unzeit freizukommen oder ihre gesicherte Lage zu ändern.

4. Einstellbares Kabelhüllenendstück nach einem der Ansprüche 1 bis 3, dadurch **gekennzeichnet,** daß die Durchgangsbohrung (8) des Hauptkörpers (CP), durch welche die Einstellstange (RE), die an der Hülle (2) des Kabels (3) angebracht ist, über einen ausreichenden Abstand gleiten kann, mit zwei Abschnitten (8a, 8b) mit unterschiedlichen Durchmessern versehen ist, die eine unterschiedliche Länge aufweisen können, wobei auf einem dieser (8a) die Einstellstange (RE) eng gleiten kann, während der andere Abschnitt (8b), der einen größeren Durchmesser aufweist, Lippen (9) aufweist, die die maximale Bewegung der Einstellstange (RE) begrenzen und sie daran hindern, aus dem Hauptkörper (CP) freizukommen.

5. Einstellbares Kabelhüllenendstück nach einem der Ansprüche 1 bis 4, dadurch **gekennzeichnet,** daß die Lage der Einstellstange (RE), die fest mit ihrem einen Ende an der Hülle (2) des Kabels (3) innerhalb des Hauptkörpers (CP) angebracht ist und die für die genaue Einstellung der Länge des mit einer Hülle versehenen Kabels (2, 3) sorgt, von Hand oder automatisch über eine Feder (10) gesteuert ist, die im Inneren des genannten Hauptkörpers (CP) aufgenommen ist.

6. Einstellbares Kabelhüllenendstück nach einem der Ansprüche 1 bis 5, dadurch **gekennzeichnet,** daß die Durchgangsbohrung (8) mit größerem Durchmesser (8b) des Hauptkörpers (CP), durch welche die Einstellstange (RE), die an der Hülle (2) des Kabels (3) angebracht ist, gleiten kann, so bemessen ist, daß sie bequem eine Feder (10) aufnehmen kann, die unter Druck automatisch die Länge des mit einer Hülle versehenen Kabels (2, 3) einstellt.

7. Einstellbares Kabelhüllenendstück nach Anspruch 6, dadurch **gekennzeichnet,** daß die Feder (10) vorzugsweise koaxial bezüglich der Einstellstange (RE) angeordnet ist und mit ihrem einen Ende gegen eine flache Oberfläche (8p) andrückt, die die Änderung des Querschnitts (8a, 8b) der Durchgangsbohrung (8) des Hauptkörpers (CP) festlegt, wobei die genannte flache Oberfläche (8p) senkrecht zur Längsachse der Durchgangsbohrung (8) steht, und mit ihrem anderen Ende gegen die Einstellstange (RE) andrückt.

8. Einstellbares Kabelhüllenendstück nach einem der Ansprüche 1 bis 7, dadurch **gekennzeichnet,** daß die Einstellstange (RE), die mit einem Außengewinde (1) versehen ist, das sich über eine ausreichende Strecke erstreckt, und mit ihrem einen Ende fest an der Hülle (2) des Kabels (3) angebracht ist, mit einer Längs-Durchgangsbohrung (11) versehen ist, durch welche der Abschnitt des hüllenlosen Kabels (3), der den Hauptkörper (CP) durchsetzt, bequem gleiten kann, wobei das genannte Ende einen vorzugsweise ringförmigen Vorsprung (12) aufweist, der mit den Lippen (9) zusammenwirkt, die im Inneren des Hauptkörpers (CP) ausgebildet sind.

9. Einstellbares Kabelhüllenendstück nach Anspruch 1, dadurch **gekennzeichnet**, daß die Haltefinger (GR) für die Einstellstange (RE) im wesentlichen spatförmig sind, zwei gegenüberliegende Oberflächen von diesen leicht gekrümmt sind, eine von diesen mit einem Gewinde (17) mit derselben Steigung wie das Gewinde (1) versehen sind, das an der Außenfläche der Einstellstange (RE) ausgebildet ist, und die Haltefinger (GR) auch mit Auswerffedern versehen sind, wie entsprechenden federnden Vorsprüngen (18), die ständig die genannten Finger (GR) radial nach außen drücken, um deren geeignete Ruhelage, d.h. gelöste Lage, in den radialen Durchgangsbohrungen (5) herzustellen, die im Hauptkörper (CP) ausgebildet sind.

10. Einstellbares Kabelhüllenendstück nach Anspruch 1 oder 9, dadurch **gekennzeichnet,** daß die Haltefinger (GR) an einem konzentrischen Ring mit offenem Umfang aus federndem Material angebracht sind, der als Auswerferfeder als Ersatz für die genannten federnden Verlängerungen (18) wirksam ist.

11. Einstellbares Kabelhüllenendstück nach einem der Ansprüche 1 bis 10, dadurch **gekennzeichnet,** daß die Längs-Festspannvorsprünge (19) der Sicherungsmutter (TA) dazu vorgesehen sind, nach einer geeigneten Drehung der Sicherungsmutter (TA) gegen die genannten Haltefinger (GR) anzudrücken und die ständige Wirkung der Auswerffedern zu überwinden, zu welchem Zweck deren Anzahl und Lage dieselbe ist wie die Anzahl und Lage der radialen Durchgangsbohrungen (5), die im Hauptkörper (CP) ausgebildet sind und in denen die genannten Haltefinger (GR) angeordnet sind, und daß die im Inneren der genannten Sicherungsmutter auch Positionierungsvorsprünge (20) vorliegen, deren Anzahl und Lage ebenfalls dieselbe ist wie die Anzahl und Lage der Aussparungen (7), die an der Außenoberfläche des Hauptkörpers (CP) ausgebildet sind, um die Lage der Sicherungsmutter (TA) in der Sperr- oder Halteposition der Einstellstange (RE) festzulegen.

12. Einstellbares Kabelhüllenendstück nach einem der Ansprüche 1 bis 11, dadurch **gekennzeichnet,** daß die Sicherungsmutter (TA) an ihrer Außenfläche mit einem gekordelten bzw. gebördelten Abschnitt oder einer Anzahl alternierender Aussparungen (21) mit geeigneten Abmessungen versehen ist, die zum Erleichtern der Arbeitsvorgänge beim Festsetzen der Länge des mit einer Hülle versehenen Kabels (2, 3) für die die Arbeit durchführende Person dienen.

13. Einstellbares Kabelhüllenendstück nach einem der Ansprüche 1 bis 12, dadurch **gekennzeichnet,** daß das Ende der Einstellstange (RE), das dem einen gegenüberliegt, das fest an der Hülle (2) des Kabels (3) angebracht ist, wahlweise mit einer rohrförmigen Führung (15) versehen ist, durch die der hüllenlose Abschnitt des Kabels (3) gleitet.

## Revendications

1. Borne pour une gaine de câble réglable à rattrapage de jeu, comportant : un corps principal creux essentiellement cylindrique (CP) pourvu de moyens mécaniques (AN) en vue de son ancrage en un point fixe, une tige de réglage (RE), qui présente un filetage extérieur (1) et qui, fixée, par l'une de ses extrémités, à la gaine (2) du câble (3) dont la longueur doit être réglée, peut coulisser, sur une distance suffisante, à l'intérieur dudit corps principal (CP) ; et des doigts de retenue (GR), qui peuvent retenir fermement ladite tige de réglage (RE) dans la position voulue, caractérisée en ce qu'elle comprend, en outre, un écrou de blocage (TA) en prise avec les doigts de retenue (GR), ledit écrou de blocage (TA) étant prévu sur la surface extérieure du corps principal (CP), et positionné de manière à recouvrir des trous radiaux débouchants (5) pratiqués dans ledit corps principal (CP), l'écrou de blocage (TA) étant intérieurement pourvu de saillies de serrage (19), pour exercer une pression sur les doigts de retenue (GR), lesdits doigts de retenue (GR) étant logés dans les trous radiaux débouchants (5) du corps principal (CP).

2. Borne pour une gaine de câble réglable suivant la revendication 1, caractérisée en ce que lesdits trous radiaux débouchants (5) sont disposés dans un seul plan, perpendiculaire à l'axe longitudinal du corps principal (CP), pour loger, avec ajustement, les doigts de retenue (GR), qui sont en même nombre que les trous radiaux.

3. Borne pour une gaine de câble réglable suivant l'une des revendications 1 ou 2, caractérisée en ce que la surface extérieure du corps principal (CP) est dotée de saillies longitudinales (6), pour positionner correctement l'écrou de blocage (TA) par rapport à la tige d'ajustement (RE) et aux doigts de retenue (GR) précitée, et d'évidements (7) en nombre suffisant et de dimensions adéquates, pour caler l'écrou de blocage (TA) en position, afin de l'empêcher de quitter inopportunément sa position de blocage, ou d'en changer.

4. Borne pour une gaine de câble réglable suivant l'une des revendications 1 à 3, caractérisée en ce que le trou 5 débouchant (8) du corps principal (CP), à travers lequel la tige de réglage (RE) attachée à la gaine (2) du câble (3) peut coulisser sur une distance suffisante, présente deux portions (8a, 8b) de diamètre différent, qui peuvent être également de longueur différente, dans l'une (8a) desquelles la tige d'ajustement (RE) peut coulisser avec un ajustement précis, tandis que l'autre portion (8b), de plus grand diamètre, comprend des lèvres (9) qui limitent le mouvement maximum de la tige de réglage (RE), et l'empêchent de sortir du corps principal (CP).

5. Borne pour une gaine de câble réglable suivant l'une des revendications 1 à 4, caractérisée en ce que la positon de la tige réglable (RE) qui est fixée, par l'une de ses extrémités, à la gaine (2) du câble (3), à l'intérieur du corps principal (CP), et qui a précisément pour mission d'ajuster la longueur du câble gainé (2, 3), est réglée manuellement ou automatiquement au moyen d'un ressort (10), incorporé dans le corps principal (CP).

6. Borne pour une gaine de câble réglable suivant l'une des revendications 1 à 5, caractérisée en ce que la portion de plus grand diamètre (8b) du trou débouchant (8) du corps principal (CP), à travers laquelle peut coulisser la tige de réglage (RE) attachée à la gaine (2) du câble (3), est dismensionnée de manière à pouvoir loger, commodément, un ressort (10) qui, soumis à une compression, règle automatiquement la longueur du câble gainé (2, 3).

7. Borne pour une gaine de câble réglable suivant la revendication 6, caractérisée en ce que le ressort (10) est disposé, de préférence, coaxialement à la tige de réglage (RE), et exerce une pression, par l'une de ses extrémités, sur la surface plate (8p) définissant la modification de la section (8a, 8b) du trou débouchant (8) du corps principal (CP), et, par l'autre de ses extrémités, sur la tige de réglage (RE), ladite surface plate (8p) étant perpendiculaire à l'axe longitudinal du trou débouchant (8).

8. Borne pour une gaine de câble réglable suivant l'une des revendications 1 à 7, caractérisée en ce que la tige de réglage (RE) qui est pourvue d'un filetage extérieur (1) qui s'étend sur une distance suffisante et qui est fixée, par l'une de ses extrémités, à la gaine (2) du câble (3), présente un trou débouchant longitudinal (11), à travers lequel peut coulisser commodément la portion non gainée du câble (3) qui traverse le corps principal (CP), ladite extrémité présentant une saillie (12), de préférence annulaire, qui coopèrent avec les lèvres (9) prévues à l'intérieur du corps principal (CP).

9. Borne pour une gaine de câble réglable suivant la revendication 1, caractérisée en ce que les doigts de retenue (GR) pour la tige de réglage (RE) sont essentiellement parallélépipèdiques, deux de leurs surfaces opposées étant légèrement incurvées, l'une d'elles étant pourvue d'un filetage (17) de pas identique à celui du filetage (1) prévu sur la surface extérieure de la tige de réglage (RE), les doigts de retenue étant également pourvus de ressorts d'éjection, tels que des saillies élastiques (18) correspondantes, qui poussent lesdits doigts (GR) de manière permanente vers l'extérieur, dans le sens radial, afin d'établir leur position appropriée de repos, c'est-à-dire de relâchement, dans les trous radiaux débouchants (5) prévus dans le corps principal (CP).

10. Borne pour une gaine de câble réglable suivant la revendication 1 ou 9, caractérisée en ce que les doigts de retenue (GR) sont attachés à une bague concentrique, à périmètre ouvert, en matière élastique, qui remplit la fonction de ressorts d'éjection en remplacement des saillies élastiques (18) précitées.

11. Borne pour une gaine de câble réglable suivant l'une des revendications 1 à 10, caractérisée en ce que les saillies de serrage longitudinales (19) de l'écrou de blocage (TA) sont prévues pour exercer une pression, après une rotation appropriée de l'écrou de blocage (TA), sur les doigts de retenue (GR), à l'encontre de l'action antagoniste permanente des ressorts d'éjection, leur nombre et leur position étant, à cette fin, identiques au nombre et à la position des trous radiaux débouchants (5) prévus dans le corps principal (CP) dans lesquels sont logés les ergots de retenue (GR), l'intérieur de l'écrou de blocage présentant également des saillies de positionnement (20), dont le nombre et la position sont également identiques au nombre et à la position des évidements (7) prévus sur la surface extérieure du corps principal (CP), pour régler la position de l'écrou de blocage (TA) dans la position de blocage ou de retenue de la tige de réglage (RE).

12. Borne pour une gaine de câble réglable suivant l'une des revendications 1 à 11, caractérisée en ce que l'écrou de blocage (TA) présente, sur sa surface extérieure, une portion moletée ou un nombre d'évidements (21) alternés, de dimensions appropriées, ayant pour but de faciliter les opérations de réglage de la longueur du câble gainé (2, 3), pour l'opérateur.

13. Borne pour une gaine de câble réglable suivant l'une des revendications 1 à 12, caractérisée en ce que l'extrémité de la tige de réglage orientée à l'opposé de celle qui est fixée à la gaine (2) du câble (3) est pourvue, optionnellement, d'un guide tubulaire (15), à travers lequel coulisse la portion non gainée du câble (3).
